# EUROPEAN PATENT APPLICATION

(11) **EP 4 635 621 A1**
(43) Date of publication of application: **22.10.2025**
(21) Application number: 23903858.1
(22) Date of filing: 01.12.2023
(51) Int. Cl.: B01J 20/08, B01J 20/28, B01J 20/30, C22B 26/12

(54) **ALUMINUM-BASED LITHIUM ADSORBENT AND MANUFACTURING METHOD THEREOF**

(30) Priority: 15.12.2022 KR 20220176062
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: KUK, Seung Taek, Pohang-si, Gyeongsangbuk-do 37671 (KR); PARK, Woonkyoung, Pohang-si, Gyeongsangbuk-do 37834 (KR); YANG, Heok, Pohang-si, Gyeongsangbuk-do 37655 (KR); PARK, Jae Sin, Pohang-si, Gyeongsangbuk-do 37673 (KR); KANG, Hee-Soo, Pohang-si, Gyeongsangbuk-do 37673 (KR)
(74) Representative: Pfenning, Meinig & Partner mbB
(86) International application number: PCT/KR2023/019731
(87) International publication number: WO 2024/128655

(57) **Abstract**

The present embodiments may provide an aluminum-based lithium adsorbent using a sulfate group (SO₄) as a counter ion, and more particularly, to an aluminum-based lithium adsorbent represented by the chemical formula Li₂SO₄·4Al (OH)₃·nH₂O (n is 1 to 6) and a method for manufacturing the same.

## Description

### CROSS-REFERENCE TO RELATED APPLICATION

This application claims priority to and the benefit of Korean Patent Application No. 10-2022-0176062 filed in the Korean Intellectual Property Office on December 15, 2022, the entire contents of which are incorporated herein by reference.

### BACKGROUND OF THE INVENTION

### (a) Field of the Invention

The present embodiments relate to an aluminum-based lithium adsorbent using a sulfate group (SO₄) as a counter ion and a method of manufacturing the same, and more particularly, to a method of manufacturing an aluminum-based lithium adsorbent with improved durability that can efficiently separate lithium in a lithium sulfate solution.

### (b) Description of the Related Art

Recently, demand for lithium batteries is rapidly increasing due to activation of smart devices such as electric vehicles. As a result, prices of lithium carbonate and lithium hydroxide, which are materials for lithium batteries, have recently risen sharply, and researches to extract lithium, which is the main raw material of the lithium carbonate and lithium hydroxide, are being activated. Lithium may be extracted from most salt lakes and ores, and examples of the extraction method may include a natural evaporation method, a chemical method, a direct lithium extraction method, etc. A variety of minerals are dissolved in salt lakes containing lithium, and a common method of extracting lithium from salt lakes is a method of extracting lithium carbonate by concentrating brine using the natural evaporation method to remove calcium, magnesium, boron, sulfate ions, etc., remaining in a lithium-containing solution, and then adding sodium carbonate. This method has the advantage of being low cost, but has the disadvantage of having a low recovery rate of lithium and taking a long time. In order to compensate for the above disadvantages, there are the chemical method and direct lithium extraction method that use supplementary raw materials to precipitate and remove impurities. Among them, the lithium extraction method is a method of using an adsorbent, and has the advantage of being able to regenerate the adsorbent and use the adsorbent repeatedly without using additional supplementary materials. Researches are being actively conducted on various types of adsorbents such as lithium manganese oxide (LMO)-based, titanium-based, zirconium-based, and aluminum-based adsorbents.

Among them, the aluminum-based adsorbent with a double plate structure may have lithium counter ions between stacked aluminum hydroxide plate structures, creating a space through which water or the counter ions may pass, and allow lithium to adsorb and desorb into pores because the size of the pores within the aluminum hydroxide plate is similar to that of lithium ions, thereby selectively extracting the lithium. Therefore, an adsorbent capable of extracting lithium from various types of lithium solutions may be manufactured depending on a type of counter ions located between the plate structures. In the brine, the counter ion is Cl⁻ in most cases, and to date, much research has been conducted on adsorbents in the form of LiCl·2Al(OH)₃·nH₂O. However, recently, various methods are being attempted to recover lithium from lithium sulfate solution discharged from lithium battery recycling, ore lithium extraction, etc. In other words, when an adsorbent is manufactured in the form of Li₂SO₄·4Al(OH)₃·nH₂O, lithium in a lithium sulfate solution, which is a counter ion SO₄²⁻, may be recovered, like the mechanism for extracting lithium from a lithium chloride solution.

Chinese patent No. CN2020-11504630 disclosed a method of manufacturing an adsorbent in the form of Li₂SO₄·4Al (OH)₃·nH₂O by dissolving aluminum salt in water, adding sodium hydroxide to form an LiOH·2Al (OH)₃·nH₂O intermediate in an alkaline atmosphere, and then reacting with a sulfate group-containing material in an acidic atmosphere. The above manufacturing method is a process of manufacturing a final adsorbent by manufacturing an intermediate through a chemical reaction in a basic atmosphere, adding a chemical compound again to form an acidic atmosphere, and then performing a chemical reaction. The entire process of manufacturing an Li₂SO₄·4Al(OH)₃·nH₂O adsorbent is complicated and there are many types of chemicals used, which causes not only a problem of increasing the overall production costs and decreasing the process efficiency, but also a problem of increasing diversity of types of pollutants discharged at a back end due to the diversity of raw materials and a load of a post-treatment process for the discharged pollutants. In addition, patent No. CN2020-11504630 disclosed forming a coating layer on the surface by additional reaction with aluminate to improve the durability of the manufactured Li₂SO₄·4Al(OH)₃·nH₂O adsorbent.

Therefore, there is a need to develop a lithium adsorbent that can efficiently extract lithium in a lithium sulfate solution through a simple process and have excellent durability.

### SUMMARY OF THE INVENTION

The present disclosure attempts to provide a method of manufacturing an aluminum-based lithium adsorbent that can efficiently recover lithium in a lithium sulfate solution and have improved durability.

According to an embodiment of the present invention, an aluminum-based lithium adsorbent may be represented by Chemical Formula 1 below.

[Chemical Formula 1] Li₂SO₄·4Al (OH)₃·nH₂O (n is 1 to 6)

In the XRD analysis, an intensity of 2θ 8°, 17°, 20°, and 26° peaks may be 10 or more, and an intensity ratio of 2θ 44° peak to 2θ 20° peak may range from 0.1 to 0.5, and an intensity ratio of 2θ 44° peak to 2θ 36° peak may range from 0.3 to 0.7.

In the XRD analysis, an intensity ratio of 2θ 44° peak to 2θ 8° peak may range from 0.2 to 0.4, an intensity ratio of 2θ 44° peak to 2θ 17° peak may range from 0.2 to 0.6, an intensity ratio of 2θ 17° peak to 2θ 36° peak may range from 1.0 to 3.0, and an intensity ratio of 2θ 26° peak to 2θ 8° peak may range from 0.3 to 0.7.

Flake-shaped primary particles are located at a predetermined angle on a surface.

According to another embodiment of the present invention, a method of manufacturing an aluminum-based lithium adsorbent includes preparing a mixed aqueous solution by dissolving aluminum sulfate and lithium sulfate in distilled water; forming a precipitate by adding sodium hydroxide to the mixed aqueous solution; aging a solution in which the precipitate is formed to form solids; and separating the solids, in which in the forming of the precipitate by adding the sodium hydroxide to the mixed aqueous solution, the precipitate represented by Chemical Formula 1 may be formed.

[Chemical Formula 1] Li₂SO₄·4Al (OH)₃·nH₂O (n is 1 to 6)

The forming of the precipitate by adding the sodium hydroxide to the mixed aqueous solution may be performed at a pH value ranging from about 7.0 to 11.0, and the sodium hydroxide may be added at a rate ranging from 0.05 mol/min to 1.0 mol/min.

In the preparing of the mixed aqueous solution by dissolving the aluminum sulfate and the lithium sulfate in the water, the aluminum sulfate and the lithium sulfate may be mixed in a ratio ranging from 2:1 to 4:1 on a molar basis, and the sodium hydroxide and the aluminum sulfate may be mixed in a ratio ranging from 1.5:1 to 4:1 on a molar basis.

In the forming of the precipitate by adding the sodium hydroxide to the mixed aqueous solution, the precipitate may be formed through a reaction according to Reaction Formula 1 below.

[Reaction Formula 1] 2Al₂ SO₄₃·mH₂O + Li₂SO₄ + 12NaOH → Li₂SO₄·4Al (OH)₃·nH₂O + 6Na₂SO₄

(Here, n is 1 to 6)

The method may further include: after the preparing of the mixed aqueous solution by dissolving the aluminum sulfate and the lithium sulfate in the distilled water, heating the mixed aqueous solution to a temperature ranging from 70°C to 90°C.

The forming of the precipitate by mixing the sodium hydroxide with the mixed aqueous solution may be performed at a temperature ranging from 70°C to 100°C.

The aging of the solution in which the precipitate is formed may be performed for 1 hour to 24 hours at a temperature of 60°C or higher.

The method may further include: after the separating of the solids, washing the separated solids with water, and after the washing of the separated solid with water, and drying the washed solids at a temperature ranging from 40°C to 60°C for 24 to 48 hours.

According to an embodiment of the present invention, it is possible to efficiently extract lithium in a lithium sulfate solution, and manufacture an aluminum-based lithium adsorbent with improved durability.

In addition, by making the overall process simple and minimizing the types of raw materials used, it is possible to improve the efficiency of the entire process and make the entire process environmentally friendly.

### BRIEF DESCRIPTION OF THE DRAWINGS

FIG. 1 is a diagram schematically illustrating a method of manufacturing an aluminum-based lithium adsorbent according to an embodiment of the present invention.
FIG. 2 is a diagram illustrating the results of XRD analysis of the aluminum-based lithium adsorbent according to Examples 1 to 3 of the present invention.
FIG. 3 is a diagram illustrating the results of the XRD analysis of the aluminum-based lithium adsorbent according to Examples 3 and 4 and Comparative Example 1 of the present invention.
FIGS. 4A to 4C are SEM images of the adsorbent according to Examples 3 and 4 and Comparative Example 1 of the present invention.
FIGS. 5A and 5B are SEM images of an adsorbent according to Comparative Examples 2 and 3.
FIG. 6 is a diagram illustrating the results of the XRD analysis before and after washing solids produced after completion of aging in Example 3 with fresh water.

### DETAILED DESCRIPTION OF THE EMBODIMENTS

In the description of the present invention, the terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific Example, and do not to limit the present invention. Singular forms used herein include plural forms as long as phrases do not clearly indicate an opposite meaning. A term "including" used in the present specification concretely indicates specific properties, regions, integer numbers, steps, operations, elements, and/or components, and is not to exclude presence or addition of other properties, regions, integer numbers, steps, operations, elements, and/or components.

All terms including technical terms and scientific terms used herein have the same meaning as the meaning generally understood by those skilled in the art to which the present invention pertains unless defined otherwise. Terms defined in commonly used dictionaries are additionally interpreted as having meanings consistent with related technical literature and currently disclosed content, and are not interpreted in ideal or very formal meanings unless defined.

Hereinafter, embodiments of the present invention will be described in detail. However, it is to be understood that this exemplary embodiment is provided as an example, and the present invention is not limited by this exemplary embodiment, but is defined by only the scope of claims to be described below.

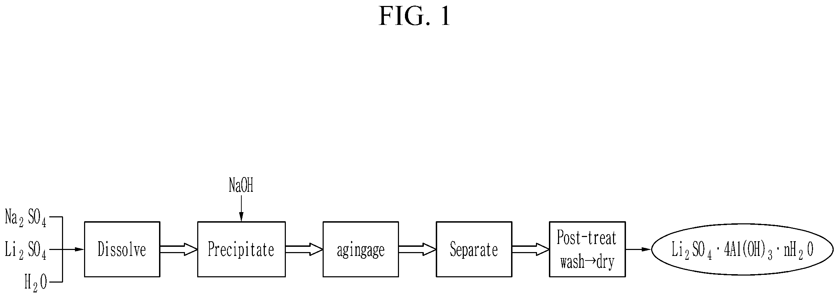

FIG. 1 is a diagram schematically illustrating a method of manufacturing an aluminum-based lithium adsorbent according to an embodiment of the present invention.

Referring to FIG. 1, a step of preparing a mixed aqueous solution may first be performed by dissolving aluminum sulfate and lithium sulfate in distilled water. The aluminum sulfate and lithium sulfate may be mixed in a ratio of 2:1 to 4:1 on a molar basis, and specifically, in a ratio of 2.5:1 to 3.5:1. When the molar ratio of the aluminum sulfate and lithium sulfate satisfies the above range, it is advantageous to effectively manufacture the aluminum-based lithium adsorbent represented by Chemical Formula 1, which is the object of the present invention.

[Chemical Formula 1] Li₂SO₄·4Al (OH)₃·nH₂O (n is 1 to 6)

The prepared mixed aqueous solution of aluminum sulfate and lithium sulfate may be heated to a temperature ranging from 70°C to 90°C, and specifically, a temperature ranging from 80°C to 90°C.

Next, the step of inputting the sodium hydroxide into the prepared mixed aqueous solution may be performed. Specifically, the sodium hydroxide may be added to the mixed aqueous solution at a predetermined rate to form a precipitate. In this case, the total amount of sodium hydroxide input may be mixed in the range of 1.5:1 to 4:1 based on the mole of aluminum sulfate, and specifically, in the range of 2:1 to 4:1. When the sodium hydroxide and aluminum sulfate are mixed in the above range, the aluminum hydroxide is effectively formed, which is advantageous in improving the quality of the final product aluminum-based lithium adsorbent.

Meanwhile, the sodium hydroxide may be added to the mixed aqueous solution of aluminum sulfate and lithium sulfate at a rate ranging from 0.05 mol/min to 1.0 mol/min and specifically, ranging from 0.1 mol/min to 0.5 mol/min. When the sodium hydroxide is added at a rate within the above range, particle sizes of products are prevented from becoming too small, which is advantageous for the effective progress of the subsequent separation process.

The step of inputting the sodium hydroxide into the prepared mixed aqueous solution may be performed under conditions where the pH value ranges from 7 to 11. When the pH value is less than the above range, it is difficult to produce an adsorbent with a structure targeted in the present invention, and when the pH value is greater than the above range, the structure of the finally produced material is destroyed, it is difficult to perform the function as the adsorbent.

In addition, it may be performed at a temperature of 100°C or lower, and specifically, at a temperature ranging from 70°C to 100°C, and the sodium hydroxide may be added to the mixed aqueous solution while stirred at a rate ranging from 200rpm to 1000rpm. When stirred as above, the input sodium hydroxide quickly diffuses into the mixed aqueous solution, which is advantageous in effectively forming the precipitate.

In this case, the precipitate may be formed through a reaction according to Reaction Formula 1 below.

[Reaction Formula 1] 2Al₂ SO₄₃·mH₂O + Li₂SO₄ + 12NaOH → Li₂SO₄·4Al (OH)₃·nH₂O + 6Na₂SO₄

(Here, n is 1 to 6)

Subsequently, after completing the input of sodium hydroxide to the prepared mixed aqueous solution, a step of aging the produced solution in which the precipitate is formed at a temperature of 60°C or higher for 1 hour to 24 hours may be performed.

After the aging is completed, the solid and liquid may be separated by filtration. The separated solids may be washed with water to remove impurities of a surface. In this case, the solids may be washed with fresh water or distilled water.

The washed solids may be dried at a temperature ranging from 40°C to 60°C for 24 to 48 hours. When the drying temperature is within the above range, it is advantageous in preventing the problem of deterioration of adsorption performance since the structure is destroyed at a high temperature without the drying time taking too long.

In another embodiment of the present invention, an aluminum-based lithium adsorbent manufactured according to the above method may be provided. The aluminum-based lithium adsorbent is represented by Chemical Formula 1 below.

[Chemical Formula 1] Li₂SO₄·4Al (OH)₃·nH₂O (n is 1 to 6)

The aluminum-based lithium adsorbent may be formed by agglomerating flake-shaped crystals to form pores.

Meanwhile, in the XRD analysis of the aluminum-based lithium adsorbent, 2θ 8°, 17°, 20°, 26°, 36°, 38°, and 44° peaks may appear. In this specification, a value for a diffraction angle 2θ in the XRD analysis may range from ±1.0°, and specifically, ±0.50°.

Meanwhile, in the XRD analysis, an intensity ratio (144°/120°) of the 2θ 44° peak to the 2θ 20° peak may range from 0.1 to 0.5, and specifically, 0.2 to 0.4.

In addition, in the XRD analysis, an intensity ratio (144°/136°) of 2θ 44° peak to 2θ 36° peak may range from 0.3 to 0.7, and specifically, 0.4 to 0.6. In addition, in the XRD analysis, an intensity ratio (144°/117°) of 2θ 44° peak to 2θ 17° peak may range from 0.2 to 0.6, and specifically, 0.3 to 0.5, and an intensity ratio (144°/18°) of 2θ 44° peak to 2θ 8° peak may range from 0.2 to 0.4, and specifically, 0.25 to 0.35.

In addition, in the XRD analysis, an intensity ratio (117°/136°) of 2θ 17° peak to 2θ 36° peak may range from 1.0 to 3.0, and specifically, 1.0 to 2.5.

In addition, an intensity ratio (126°/18°) of 2θ 26° peak to 2θ 8° peak may range from 0.3 to 0.7, and specifically, 0.4 to 0.6.

Hereinafter, embodiments of the present invention will be described in detail. However, it is to be understood that this exemplary embodiment is provided as an example, and the present invention is not limited by this exemplary embodiment, but is defined by only the scope of claims to be described below.

### (Examples 1 to 3)

7L of water is first input into a 10L double jacket reactor, and temperature rises to 50°C. 1.49 kg of Al₂ SO₄₃·mH₂O (m is 14 to 18) was input, and 0.14 kg of Li₂SO₄ was input. By mixing at a stirring rate of 200 rpm, a completely dissolved mixed aqueous solution was obtained for 30 minutes. Then, the temperature of the mixed aqueous solution was changed to 70°C, 80°C, and 90°C to raise the temperature. After raising the temperature to the above temperature, 1.14 kg of 50wt% NaOH is input for 1 hour. In this case, a pH value of the solution was adjusted to about 7. In addition, the solution temperature should not exceed 100°C, and after the completion of the reaction, the solution is aged for 1 to 16 hours at a temperature of 60°C or higher. After the aging is completed, the resulting solids are separated by filtration and washed twice (1 L) with fresh water. The solids washed with the fresh water were filtered and dried in an oven at 45°C for 24 hours to finally prepare 0.5 kg of aluminum-based lithium adsorbent. In this case, a manufacturing yield of the aluminum-based lithium adsorbent was confirmed to be about 90%.

### (Example 4)

An aluminum-based lithium adsorbent was prepared in the same manner as in Example 3, except that the temperature of the mixed aqueous solution was set to 90°C and the pH was 11.07.

### (Comparative Example 1)

An aluminum-based lithium adsorbent was prepared in the same manner as in Example 4, except that the pH was set to 12.82.

### (Comparative Example 2)

An aluminum-based lithium adsorbent was manufactured in the same manner as Example 1, except that LiOH was used instead of Li₂SO₄.

### (Comparative Example 3)

An aluminum-based lithium adsorbent was manufactured in the same manner as in Example 1, except that NaOH was input into the mixed aqueous solution of Al₂(SO₄)₃·mH₂O and Li₂SO₄ in batch.

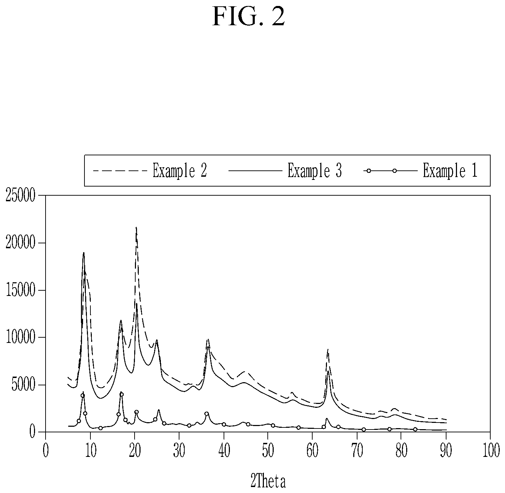

FIG. 2 is a diagram illustrating the results of XRD analysis of the aluminum-based lithium adsorbent according to Examples 1 to 3 of the present invention.

Referring to FIG. 2, in the results of the XRD analysis of the aluminum-based lithium adsorbent according to Examples 1 to 3 of the present invention, it can be seen that 2θ 8°, 17°, 20°, 26°, 36°, 38°, and 44° peaks, which are a representative peaks of Li₂SO₄·4Al (OH)₃·nH₂O, are clearly formed. From this, it may be determined that the aluminum-based lithium adsorbent with excellent crystallinity was manufactured.

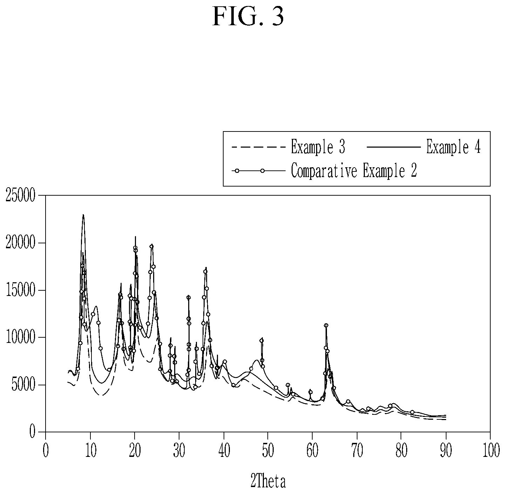

FIG. 3 is a diagram illustrating the results of the XRD analysis of the aluminum-based lithium adsorbent according to Examples 3 and 4 and Comparative Example 1 of the present invention.

Referring to FIG. 3, in the case of the aluminum-based lithium adsorbent according to Examples 3 to 4 of the present invention, it can be seen that the representative peaks of Li₂SO₄·4Al(OH)₃·nH₂O appears to be clearly formed, and the adsorbent with excellent crystallinity is manufactured.

On the other hand, in the case of Comparative Example 1, the representative 2θ 44° peak of Li₂SO₄·4Al(OH)₃·nH₂O disappeared, and the 2θ 26° peak appeared to shift to the left. In addition, other peaks other than the representative peaks of Li₂SO₄·4Al(OH)₃·nH₂O appeared to be formed. From this, it can be seen that the crystal structure of the adsorbent according to Comparative Example 2 has changed.

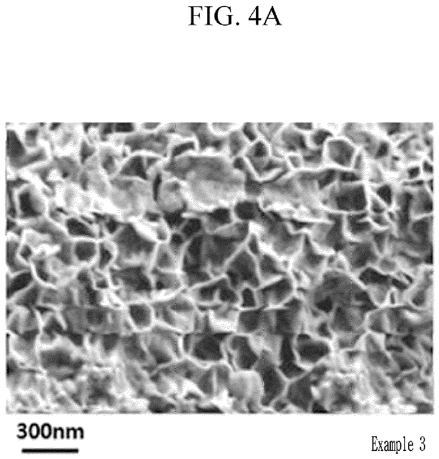

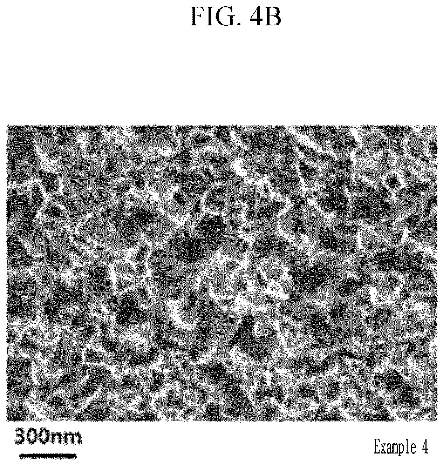

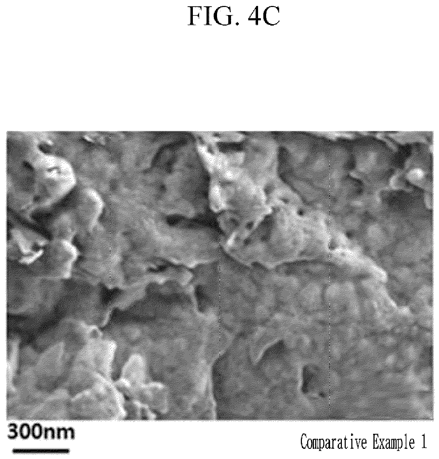

In addition, from the SEM analysis results of the aluminum-based lithium adsorbent according to Examples 3 to 4 and Comparative Example 1 in FIGS. 4A to 4C, it can be seen that the adsorbent according to Examples 3 and 4 had a well-formed crystal phase. In addition, it can be seen that the adsorbent is in the form of agglomerated flake-shaped primary particles and a large surface of the flake-shaped primary particles is located at a predetermined angle with the surface of the adsorbent. On the other hand, in the case of the adsorbent according to Comparative Example 1, the particles appeared to be melted and aggregated.

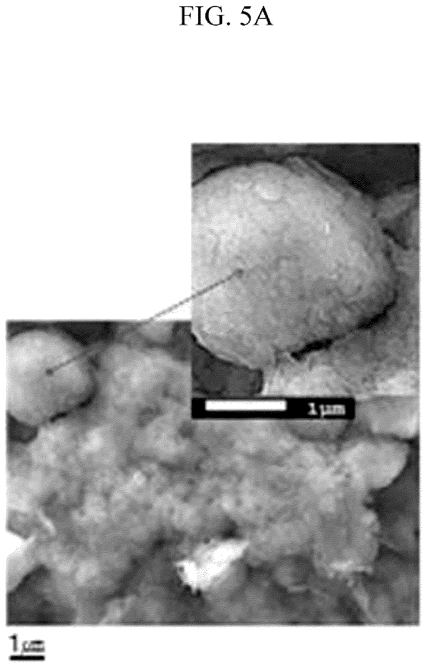

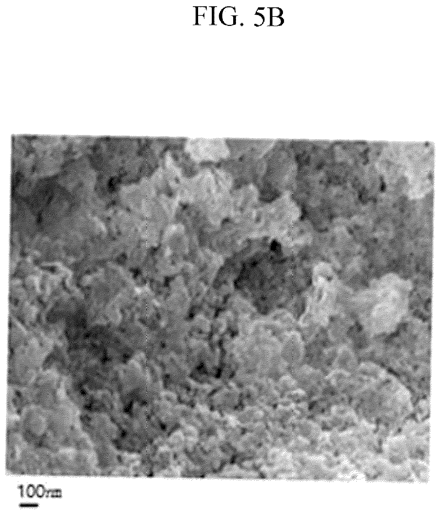

FIGS. 5A and 5B are SEM images of an adsorbent according to Comparative Examples 2 and 3.

FIG. 5A illustrates an SEM image of the adsorbent according to Comparative Example 2. FIG. 5B illustrates an SEM image of the adsorbent according to Comparative Example 3.

Referring to FIGS. 5A and 5B, it can be seen that in the case of FIG. 5B where NaOH was input in batch, nano-sized particles were formed, while in the case of FIG. 5A where NaOH was input stepwise, NaOH grew into micro-sized particles. In addition, referring to FIG. 5A, the flake-shaped primary particles were agglomerated to form the micro-sized particles, and the large surfaces of the flake-shaped primary particles were observed to form the micro-sized particles while surrounding the surface.

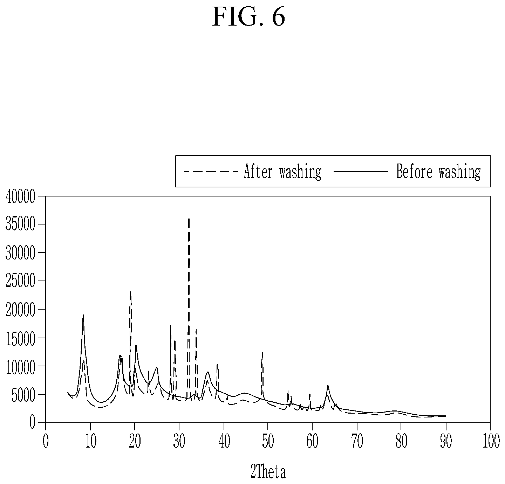

FIG. 6 illustrates the results of the XRD analysis before and after washing with fresh water when the solids produced were filtered and separated after completion of aging in Example 3.

Referring to FIG. 6, it can be seen that after washing with fresh water, the Na₂SO₄ peak remaining on the surface disappeared, and the representative peaks of Li₂SO₄·4Al(OH)₃·nH₂O appeared more clearly. Therefore, it can be seen that the purity of the aluminum-based lithium adsorbent manufactured through the washing with fresh water is improved.

### (Experimental Example)

Lithium adsorption and desorption experiments in a lithium sulfate solution were performed using the aluminum-based lithium adsorbent manufactured according to Example 3 of the present invention.

First, a lithium sulfate solution in which lithium sulfate was dissolved at concentrations of 970 ppm and 510 ppm, respectively, was prepared.

For the adsorption experiment, after 100 mL of lithium sulfate solutions with lithium concentrations of 1000 ppm and 500 ppm were each prepared, were each added with 10 g of adsorbents and stirred for 24 hours to be adsorbed, and put back into 100 mL of fresh water and stirred for 24 hours to be desorbed, the lithium concentration of each solution was measured by ICP to calculate the adsorption and desorption rates.

The experimental results were summarized in Table 1 below

**(Table 1)**

| Lithium sulfate concentration (ppm) | | Adsorption concentration (ppm) | Desorption concentration (ppm) | Adsorption rate/desorption rate (%) |
|---|---|---|---|---|
| Initial | Adsorbed filtrate | | | |
| 970 | 850 | 120 | 110 | 12.4/91.7 |
| 510 | 410 | 100 | 90 | 19.6/90.0 |

Referring to Table 1, when using the aluminum-based lithium adsorbent manufactured according to the present invention, it was confirmed that the lithium adsorption rate in the lithium sulfate solution is about 12% to 20%, and the desorption rate is 90% or more.

The present invention is not limited to the exemplary embodiments, but may be manufactured in a variety of different forms, and the present invention may be manufactured in a variety of different forms, and those of ordinary skill in the art to which the present invention pertains will understand that the present invention may be implemented in other specific forms without changing the technical spirit or essential features of the present invention. Therefore, it should be understood that the above-mentioned exemplary embodiments are exemplary in all aspects but are not limited thereto.

## Claims

1. An aluminum-based lithium adsorbent,
in XRD analysis, with a peak at 2θ 8°, 17°, 20°, and 26°, and
represented by Chemical Formula 1 below,
[Chemical Formula 1] Li₂SO₄·4Al (OH)₃·nH₂O (n is 1 to 6)

2. The aluminum-based lithium adsorbent of claim 1, wherein:
in the XRD analysis, an intensity ratio of 2θ 44° peak to 2θ 20° peak ranges from 0.1 to 0.5.

3. The aluminum-based lithium adsorbent of claim 1, wherein:
in the XRD analysis, an intensity ratio of 2θ 44° peak to 2θ 36° peak ranges from 0.3 to 0.7.

4. The aluminum-based lithium adsorbent of claim 1, wherein:
in the XRD analysis, an intensity ratio of 2θ 17° peak to 2θ 36° peak ranges from 1.0 to 3.0.

5. The aluminum-based lithium adsorbent of claim 1, wherein:
in the XRD analysis, an intensity ratio of 2θ 44° peak to 2θ 8° peak ranges from 0.2 to 0.4.

6. The aluminum-based lithium adsorbent of claim 1, wherein:
in the XRD analysis, an intensity ratio of 2θ 44° peak to 2θ 17° peak ranges from 0.2 to 0.6.

7. The aluminum-based lithium adsorbent of claim 1, wherein:
in the XRD analysis, an intensity ratio of 2θ 26° peak to 2θ 8° peak ranges from 0.3 to 0.7.

8. The aluminum-based lithium adsorbent of claim 1, wherein:
flake-shaped primary particles are located at a predetermined angle on a surface.

9. A method of manufacturing an aluminum-based lithium adsorbent, comprising:
preparing a mixed aqueous solution by dissolving aluminum sulfate and lithium sulfate in distilled water;
forming a precipitate by adding sodium hydroxide to the mixed aqueous solution;
aging a solution in which the precipitate is formed to form solids; and
separating the solids,
wherein in the forming of the precipitate by adding the sodium hydroxide to the mixed aqueous solution, the precipitate represented by Chemical Formula 1 is formed.
[Chemical Formula 1] Li₂SO₄·4Al (OH)₃·nH₂O (n is 1 to 6)

10. The method of claim 9, wherein:
the forming of the precipitate by adding the sodium hydroxide to the mixed aqueous solution
is performed at a pH value ranging from about 7.0 to 11.0.

11. The method of claim 9, wherein:
in the forming of the precipitate by adding the sodium hydroxide to the mixed aqueous solution,
the sodium hydroxide is added at a rate ranging from 0.05 mol/min to 1.0 mol/min.

12. The method of claim 9, wherein:
in the preparing of the mixed aqueous solution by dissolving the aluminum sulfate and the lithium sulfate in the water,
the aluminum sulfate and the lithium sulfate are mixed in a ratio ranging from 2:1 to 4:1 on a molar basis.

13. The method of claim 9, wherein:
in the forming of the precipitate by adding the sodium hydroxide to the mixed aqueous solution,
the sodium hydroxide and the aluminum sulfate are mixed in a ratio ranging from 1.5:1 to 4:1 on a molar basis,

14. The method of claim 9, wherein:
in the forming of the precipitate by adding the sodium hydroxide to the mixed aqueous solution,
the precipitate is formed through a reaction according to Reaction Formula 1 below.
[Reaction Formula 1] 2Al₂ SO₄₃·mH₂O + Li₂SO₄ + 12NaOH → Li₂SO₄·4Al (OH)₃·nH₂O + 6Na₂SO₄
(Here, n is 1 to 6)

15. The method of claim 9, further comprising:
after the preparing of the mixed aqueous solution by dissolving the aluminum sulfate and the lithium sulfate in the distilled water,
heating the mixed aqueous solution to a temperature ranging from 70°C to 90°C.

16. The method of claim 9, wherein:
the forming of the precipitate by mixing the sodium hydroxide with the mixed aqueous solution
is performed at a temperature ranging from 70°C to 100°C.

17. The method of claim 9, wherein:
the aging of the solution in which the precipitate is formed is performed for 1 hour to 24 hours at a temperature of 60°C or higher.

18. The method of claim 9, further comprising:
after the separating of the solids,
washing the separated solids with water.

19. The method of claim 18, further comprising:
after the washing of the separated solids with water,
drying the washed solids at a temperature ranging from 40°C to 60°C for 24 to 48 hours.
